# EUROPEAN PATENT APPLICATION

(11) **EP 2 323 447 A2**
(43) Date of publication of application: **18.05.2011**
(21) Application number: 10189858.3
(22) Date of filing: 03.11.2010
(51) Int. Cl.: H04W 48/20

(54) **Electronic device and network accessing method thereof**

(30) Priority: 11.11.2009 KR 20090108756; 30.06.2010 KR 20100062844
(71) Applicant: SAMSUNG ELECTRONICS CO., LTD., Suwon-si, Gyeonggi-do (KR)
(72) Inventor: Yang, Geun-sam, Gyeonggi-do (KR); Shim, Seung-seop, Gyeonggi-do (KR); Yun, Hyun-kyu, Seoul (KR); Lee, Moo-hyun, Suwon-si (KR)
(74) Representative: Hewett, Jonathan Michael Richard

(57) **Abstract**

Disclosed are an electronic device enabling wireless networking through a wireless network and a network accessing method thereof, the electronic device including: a communicating unit which accesses the wireless network to perform wireless networking; an encoding unit which encodes a signal transmitted from or received by the communicating unit; and a controller which controls the encoding unit to encode identification information of the electronic device, in response to the electronic device being powered on, and controls the communicating unit to initiate an access to the wireless network based on the identification information encoded by the encoding unit. Accordingly, an automatic access to the wireless network is initiated when the electronic device is powered on, without any special manipulation by the user, thereby enhancing convenience to the user.

## Description

The present invention relates to an electronic device enabling wireless networking through a wireless network, and a network accessing method thereof. More particularly, the present invention relates to an electronic device enabling an automatic network access, to thereby perform a wireless network communication.

In networking, a wireless network has been given more weight than the conventional wired network. However, as settings of the wireless network employ WINDOWS^{®} or LINUX^{®} set to general personal computers (PC), the setting methods thereof have been complicated and inconvenient for ordinary consumers of electric home appliances to use them. For the sake of simplicity and convenience, a Wi-Fi protected setup (WPS) method has been used. As an initial registration process for allowing the electric home appliances employing the WPS method to access the wireless network, there may be implemented a personal identification number (PIN) method, a push button connection (PBC) method, a near field communication (NFC) method, a universal serial bus (USB) method, etc. Meanwhile, intervention of a user is positively necessary for performing the initial registration process through the foregoing methods. However, many users of the electric home appliances who are not accustomed to using computers are unfamiliar with this process. In addition, as users are asked to directly set up a network through a setup menu using an on screen display (OSD), usage thereof is still inconvenient to the users.

Accordingly, the exemplary embodiments provide an electronic device and a network accessing method thereof, enabling an automatic access to a wireless network communication without any particular intervention of a user once the electronic device is powered on.

According to an aspect of the present invention, there is provided an electronic device enabling wireless networking through a wireless network, the electronic device including: a communicating unit which performs wireless communication through a relay relaying communication in the wireless network; and a controller which ascertains whether the electronic device is powered on, receives a relay signal from the relay if the electronic device is powered on, and controls the communicating unit to initiate an access to the wireless network.

The electronic device may further include an encoding unit which encodes a signal transmitted from or received by the communicating unit, wherein the controller controls the encoding unit to encode identification information of the electronic device if the relay signal is received through the communicating unit, and controls the communicating unit to transmit the encoded identification information to the relay.

The encoding unit may encode the identification information based on at least one coding method selected from among a plurality coding methods.

The encoding unit may repeat selection of one coding method from among the plurality coding methods on a predetermined cycle.

The electronic device may further include an encrypting unit which performs encryption, wherein the controller controls the encrypting unit to encrypt the identification information encoded by the encoding unit.

The electronic device may further include a signal generating unit which generates a signal having a received signal strength indication (RSSI) pattern, wherein the controller controls the communicating unit to transmit the signal having the generated RSSI pattern.

The controller may control the signal generating unit to generate the encoded identification information as the signal having the RSSI pattern.

The controller may control the signal generating unit to generate the encoded and encrypted identification information as the signal having the RSSI pattern.

The signal generating unit may generate the signal having the RSSI pattern as a signal having a cycle in microseconds.

The relay signal may include a signal having a received signal strength indication (RSSI) pattern, and the controller may determine whether an RSSI strength of the received relay signal is equal to or higher than a predetermined threshold value, and designate the relay that transmits the relay signal as a device for initiating an access to the wireless network if the RSSI strength is equal to or higher than the threshold value as a result of determination.

The relay signal may include a beacon signal transmitted from the relay or a probe response signal corresponding to a probe request signal requested by the communicating unit.

The relay signal may include a data frame having recognition information for allowing the electronic device to initiate an access to the wireless network.

The recognition information may include at least one of information about presence of the recognition information, information about a vendor of the electronic device, product information of the electronic device, and information about integrity of the recognition information.

The electronic device may further include a second signal generating unit to generate an association request signal, wherein the controller ascertains an integrity of the relay signal and controls the communicating unit to transmit the association request signal generated by the second signal generating unit to the designated relay if the relay signal has the integrity as a result of the ascertaining.

The electronic device may further include an encrypting unit which performs encryption, wherein the controller controls the encrypting unit to encrypt the identification information for joining the wireless network, and controls the second signal generating unit to generate an association request signal including the encrypted identification information.

The controller may control the second signal generating unit to generate an association request signal including information about an integrity of the encrypted identification information.

The controller may control the communicating unit to initiate an access to the wireless network through the relay if receiving an association response signal from the relay corresponding to the transmitted association request signal.

According to another aspect of the present invention, there is provided a wireless network accessing method of an electronic device enabling wireless networking through a wireless network, the method including: ascertaining whether the electronic device is powered on; and controlling a communicating unit, which performs wireless communication through a relay relaying communication in the wireless network, to receive a relay signal from the relay if the electronic device is powered on and initiate an access to the wireless network.

The method may further include: encoding, by an encoding unit, identification information of the electronic device; and transmitting the encoded identification information to the relay through the communicating unit.

The encoding may include encoding the identification information based on one selected method from among a plurality of coding methods.

The encoding may include repeating selection of the coding method on a predetermined cycle.

The method may further include encrypting the encoded identification information.

The method may further include generating a signal having a received signal strength indication (RSSI) pattern.

The generating the signal may include generating the encoded identification information as the signal having the RSSI pattern.

The generating the signal may include generating the encoded and encrypted identification information as the signal having the RSSI pattern.

The signal having the RSSI pattern may have a cycle in microseconds.

The relay signal may include a signal having the RSSI pattern, and the initiating the access to the wireless network may include: determining whether an RSSI strength of the received relay signal is equal to or higher than a predetermined threshold value; and designating a relay that transmits the relay signal as a device for initiating an access to the wireless network if the RSSI strength is equal to or higher than the threshold value as a result of determination.

The relay signal may include a beacon signal transmitted from the relay or a probe response signal corresponding to a probe request signal requested by the communicating unit.

The relay signal may include a data frame having recognition information for allowing the electronic device to initiate an access to wireless network.

The recognition information may include at least one of information about presence of the recognition information, information about a vendor of the electronic device, product information of the electronic device, and information about integrity of the recognition information.

The designating a device for initiating the access to the wireless network may include: ascertaining an integrity of the relay signal; and generating an association request signal and transmitting the association request signal to the relay through the communicating unit if the relay signal has the integrity as a result of the ascertaining.

The generating the association request signal may include: encrypting, by an encrypting unit, identification information for joining the wireless network; and generating an association request signal including the encrypted identification information.

The generating the association request signal may include generating an association request signal including integrity information about the encrypted identification information.

The initiating the access to the wireless network may include initiating the access to the wireless network through the relay if receiving an association response signal from the relay corresponding to the transmitted association request signal.

The above aspects will become apparent and more readily appreciated from the following description of the exemplary embodiments, taken in conjunction with the accompanying drawings of which:
FIG. 1 is a block diagram illustrating a configuration of an electronic device according to an exemplary embodiment;
FIGs. 2A and 2B illustrate signal cycles according to an exemplary embodiment;
FIG. 3 illustrates an example of generating a signal having a received signal strength indication (RSSI) pattern of unique identification information of an electronic device according to an exemplary embodiment;
FIG. 4 is a flow chart illustrating a network access of an electronic device according to a first exemplary embodiment;
FIG. 5 illustrates a wireless network access of the electronic device according to the first exemplary embodiment;
FIG. 6 is a flow chart illustrating a network access of an electronic device according to a second exemplary embodiment;
FIG. 7 illustrates a wireless network access of the electronic device according to the second exemplary embodiment; and
FIGs. 8 through 14 illustrate an example of a signal frame transmitted and received by the electronic device according to the second exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

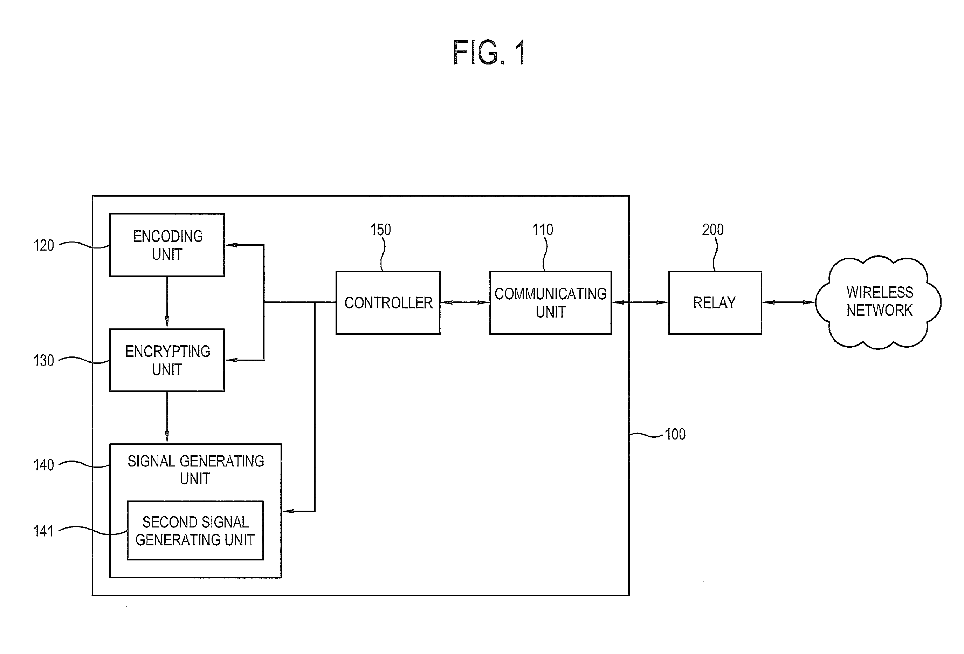

FIG. 1 is a block diagram illustrating a configuration of an electronic device 100 according to an exemplary embodiment. As illustrated in FIG. 1, the electronic device 100 includes a communicating unit 110, an encoding unit 120, an encrypting unit 130, a signal generating unit 140, a second signal generating unit 141 and a controller 150.

The electronic device 100 enables wireless networking through a wireless network. Examples thereof may include a displaying apparatus, a personal video recorder (PVR), a digital versatile disc (DVD) player and/or a blue ray disc (BD) player, an audio component, a mobile phone, a personal computer (PC), a video console, a set top box, a recording and/or reproducing apparatus, and so on. In addition, examples of the electronic device 100 may also include a variety of electric home appliances capable of performing a wireless home network communication, such as a refrigerator, an air-conditioner, an electric rice cooker, a microwave oven, a video phone, an Internet phone, a heater, a washer and/or drier, a convection or conventional oven, a stove, and so on.

The communicating unit 110 accesses a wireless network to thereby perform a wireless communication. The communicating unit 110 may join the wireless network through a relay 200 relaying communication in the wireless network, thereby performing wireless communication. The communicating unit 110 can perform any type of wireless network communication, including a wireless local area network (WLAN) communication. Thus, the communicating unit 110 may include any type of protocol available for wireless network communication, such as a WLAN communication protocol or a Wi-Fi communication protocol.

The encoding unit 120 encodes a signal transmitted from or received by the communicating unit 110. The encoding unit 120 also encodes unique identification information of the electronic device, for example as a binary code.

The unique identification information of the electronic device may be numerals, characters or a combination of numerals and characters. Accordingly, the encoding unit 120 encodes the unique identification information of the electronic device 100 including numerals and/or characters as a binary code.

The unique identification information of the electronic device is information previously set to allow the relay 200 to identify the electronic device 100.

The encoding unit 120 encodes the identification information based on a coding method selected from among a plurality of coding methods. Thus, the encoding unit 120 may employ a plurality of coding methods with respect to numerals/characters, and may encode the unique identification information (for example, binary-coded unique identification information) using at least one coding method selected from among the plurality of coding methods. For example, it is possible to encode unique identification information formed of four numerals and/or characters by applying different coding methods to each numeral and/or each character.

The encoding unit 120 may repeat selection of a coding method from the plurality of coding methods on a predetermined cycle. For example, by repeating selection of the coding method on a predetermined cycle, network hacking from the outside may be prevented.

The encoding unit 120 may further include a decoding unit (not shown) to decode the encoded signal received by the communicating unit 110.

The electronic device 100 may further include an encrypting unit 130 which performs encryption. The encrypting unit 130 encrypts the identification information encoded by the encoding unit 120. As an exemplary embodiment, the encrypting unit 130 may apply an encrypted algorithm such as an advanced encryption standard (AES) or a data encryption standard (DES), to encrypt the encoded identification information.

The encrypting unit 130 may further include a decrypting unit (not shown) to decrypt the encrypted signal received by the communicating unit 110.

The electronic device 100 may further include a signal generating unit 140 which generates a signal having a received signal strength identification (RSSI). The generated signal with the RSSI pattern may be transmitted through the communicating unit 110.

The signal generating unit 140 may generate the unique identification information of the electronic device 100, encoded by the encoding unit 120, as a signal having the RSSI pattern. It may also generate the unique identification information of the electronic device 100, encoded by the encoding unit 120 and encrypted by the encrypting unit 130, as a signal having the RSSI pattern.

The RSSI identifies the strength of a received signal, and a numerical value of the RSSI varies depending upon wireless technologies. However, a range of the numeral values may be differently set according to the manufacturers of the electronic devices.

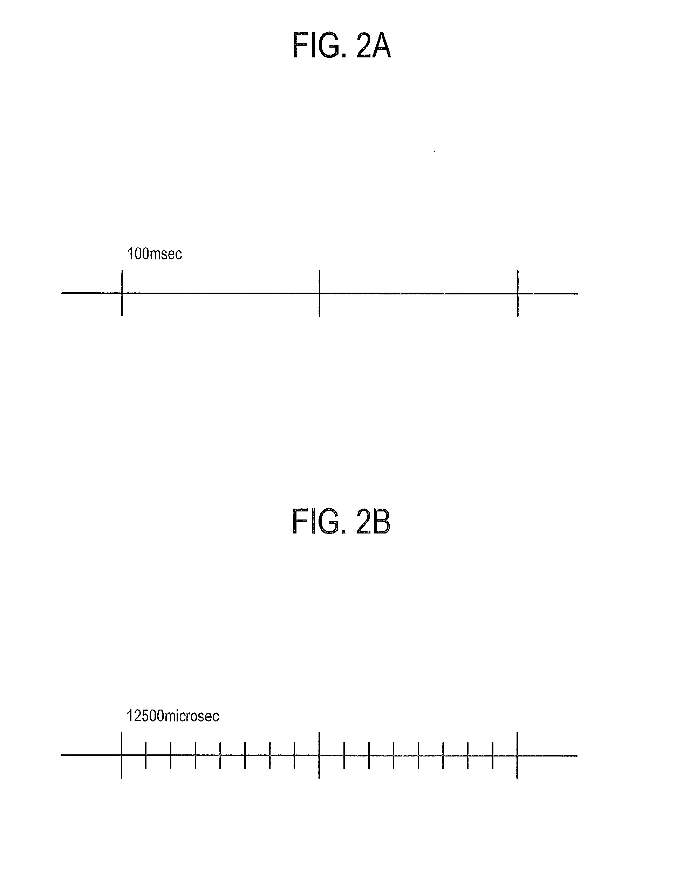

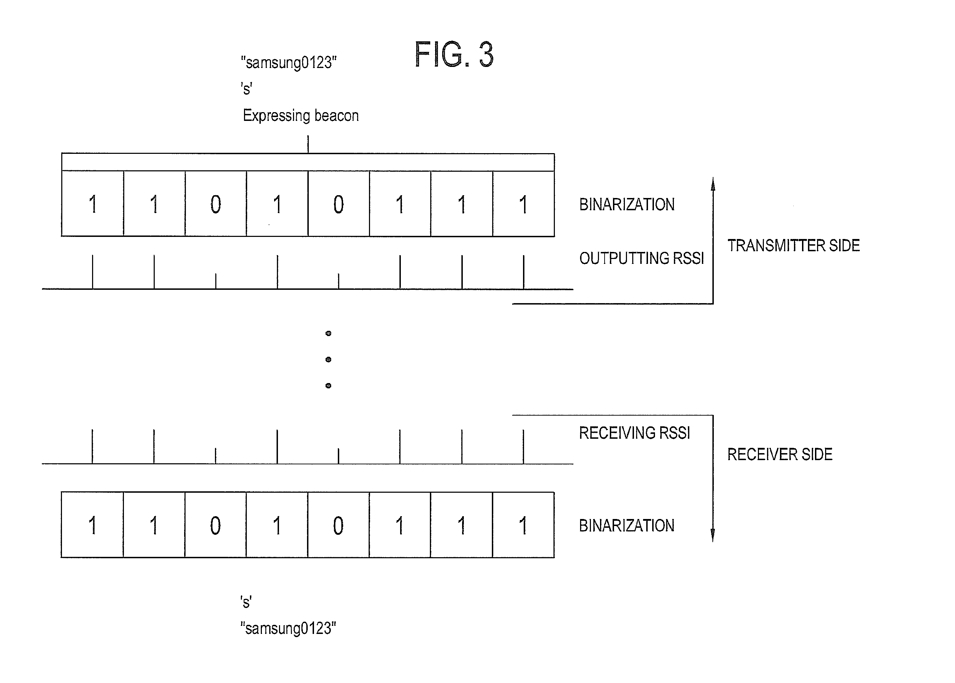

The signal generating unit 140 generates a signal having the RSSI pattern as a signal having a cycle in microseconds. As an exemplary embodiment, the signal generating unit 140 may generate a beacon signal having a RSSI pattern, and the beacon signal may have a cycle in microseconds. This will be described later in more detail with respect to FIGs. 2 and 3.

The electronic device 100 may further include a second signal generating unit 141 to generate an association request signal with regard to the relay 200.

Under control of the controller 150 (to be described later), the second signal generating unit 141 may generate the association request signal for requesting a join to the wireless network relayed by the relay 200 after the relay 200 is identified for accessing the wireless network and an integrity of a relay signal received from the relay 200 is ascertained.

The association request signal may include the identification information encrypted by the encrypting unit 130 for joining the wireless network. For example, the identification information for joining the wireless network may include a personal identification number (PIN) for allowing the electronic device 100 to join the wireless network.

Also, the association request signal may include integrity information about the encrypted identification information. Thus, the relay 200 that receives the association request signal ascertains the identification information used in joining the wireless network and the integrity information, and transmits an association response signal to the electronic device 100 in response to the association request signal if the identification information is valid and has sufficient integrity.

Thus, the controller 150 controls the communicating unit 110 to initiate an access to the wireless network through the relay 200 when receiving the association response signal from the relay 200.

The controller 150 confirms whether the electronic device 100 is powered on. If it is confirmed that the electronic device 100 is powered on, the controller 150 may control the communication unit 110 to receive a relay signal from the relay 200 and initiate the access to the wireless network.

Here, the relay signal may include a beacon signal periodically transmitted from the relay 200. Also, the relay signal may include a probe response signal corresponding to a probe request signal requested by the communication unit 110.

The relay signal may include a data frame that includes recognition information for initiating the access to the wireless network by the electronic device. The recognition information may include at least one of information about presence of the recognition information, information about a vendor of the electronic device, product information about the electronic device, and integrity information of the recognition information.

The relay signal may include a signal having the RSSI pattern. Thus, the controller 150 determines whether an RSSI strength of the relay signal received from the relay 200 through the communicating unit 110 is equal to or higher than a predetermined threshold value.

The electronic device 100 may receive a plurality of relay signals from a plurality of relays 200 through the communicating unit 110. In this case, the controller 150 determines whether each RSSI strength of the plurality of received relay signals is equal to or higher than each predetermined threshold value.

As a result of determining the RSSI strength, if there is no relay signal having an RSSI strength equal to or higher than the predetermined threshold value, or if there are two or more relay signals having an RSSI strength equal to or higher than the predetermined threshold value, a user may determine which relay 200 to use for communication.

As a result of determining the RSSI strength, if there is one relay signal having an RSSI strength equal to or higher than the predetermined threshold value, the controller 150 controls the encoding unit 120 and the encrypting unit 130 to encode and/or encrypt the unique identification information of the electronic device 100. The encoded and/or encrypted identification information is generated as a signal having a predetermined RSSI pattern by the signal generating unit 140, and transmitted to the relay 200 through the communicating unit 110.

If receiving the encoded and/or encrypted signal having a predetermined RSSI pattern from the relay 200, corresponding to a signal having an RSSI pattern of the encoded and/or encrypted unique identification information transmitted through the communicating unit 110, the controller 150 controls the encoding unit 120 and/or the encrypting unit 130 to decode and/or decrypt the signal received from the relay 200, thereby ascertaining the integrity of the signal. Accordingly, if it is determined that the signal has sufficient integrity, the controller 150 controls the second signal generating unit 141 to generate the association request signal and transmit the generated association request signal to the relay 200 through the communicating unit 100. When receiving the association response signal corresponding to the association request signal from the relay 200, the controller 150 controls the communicating unit 110 to initiate the access to the wireless network through the relay 200.

According to another exemplary embodiment, if there is one relay signal having the RSSI strength greater than or equal to the predetermined threshold value, the controller 150 may ascertain the recognition information for initiating the access to the wireless network by the electronic device, included in the data of the relay signal. As a result of ascertaining the recognition information, if the recognition information is valid and the relay signal has the sufficient integrity, the controller 150 controls the second signal generating unit 141 to generate the association request signal and transmit the generated association request signal to the relay 200 through the communicating unit 100. The association request signal may include the encrypted identification information and integrity information used to initiate the access to the wireless network. If the relay 200 transmits the association response signal corresponding to the association request signal through the communicating unit 110 after ascertaining the encrypted identification information and integrity information, the controller 150 controls the communicating unit 110 to initiate the access to the wireless network through the relay 200.

The electronic device 100 may further include a user input unit (not shown). The user input unit is designed to input a power on/off signal, and may be provided as a button type and/or as a touch panel for a touch screen in the electronic device 100. Furthermore, the user input unit may be provided in various other or additional forms such as a remote controller, a keyboard, etc. connected to the electronic device 100 by wire or wirelessly. Thus, if the electronic device 100 is powered on according to input of the power on signal through the user input unit, the controller can confirm the power on of the electronic device 100.

Here, the electronic device 100 may include a plug and play (PnP) function. As an exemplary embodiment, if the PnP function is performed through a connection of a universal serial bus (USB) and the electronic device 100 is powered on, the controller 150 can confirm the power on of the electronic device 100. If the PnP function is performed through a channel selection input, not a power on/off input by the user input unit, and the electronic device 100 is powered on, the controller 150 can confirm the power on of the electronic device 100.

FIGs. 2A and 2B illustrate signal cycles according to an exemplary embodiment.

FIG. 2A shows a cycle of a related art beacon signal. As shown, the related art beacon signal has a cycle in 100 to 200 milliseconds.

However, FIG. 2B shows a cycle of a signal having an RSSI pattern generated by the signal generating unit 140. The cycle is in the unit of microseconds. Thus, where the unique identification information of the electronic device 100 according to an exemplary embodiment is generated as a signal having an RSSI pattern, a signal having the RSSI pattern corresponding to the identification information can be generated, without regard to the size of the unique identification information.

FIG. 3 illustrates an example of generating a signal having an RSSI pattern of unique identification information of an electronic device 100 according to an exemplary embodiment.

According to the exemplary embodiment, the RSSI pattern may be set to 10 (Low) to 127 (High), though it is understood that another exemplary embodiment is not limited thereto. The unique identification information of the electronic device 100 may include a mixture of characters and numerals, which may be binary-coded by the encoding unit 120 (i.e., 0 and 1). The unique identification information binary-coded by the encoding unit 120 may be generated in the signal generating unit 140 as a signal having an RSSI pattern, in which "0" indicates a signal having an RSSI strength of 10 (Low) and "1" indicates a signal having an RSSI strength of 127 (High).

According to the present exemplary embodiment, it will be assumed that unique identification information of the electronic device 100 is "samsung0123," for the sake of convenience. As illustrated, for the first character "s," a signal which is binary-coded into 8 bits (11010111) and generated having an RSSI strength 127 for "1" of the binary code and 10 for "0" of the binary code may be transmitted through the communicating unit 110.

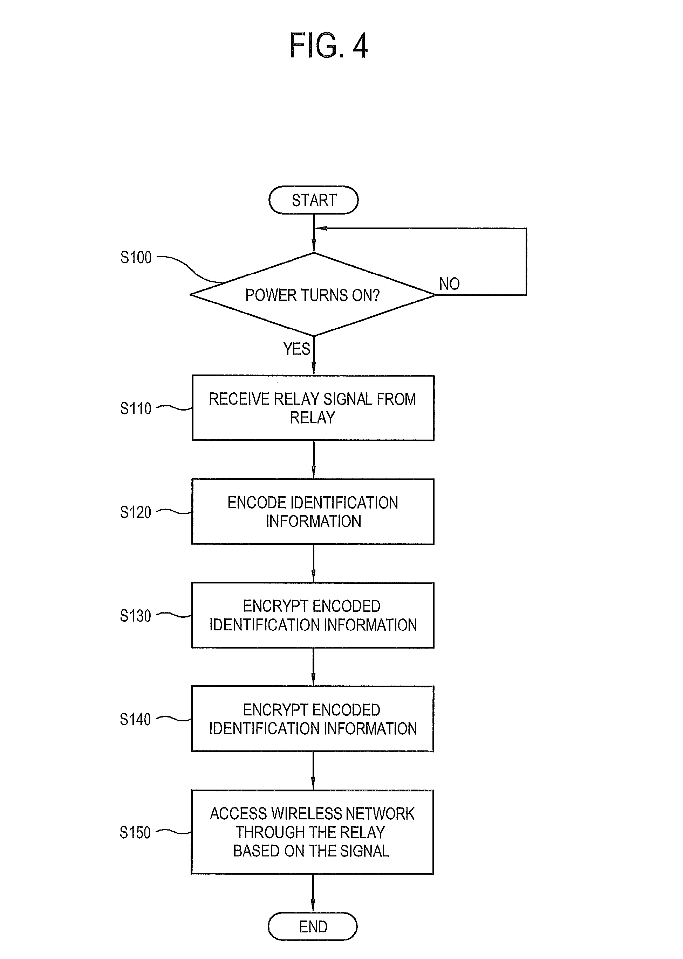

FIG. 4 is a flow chart illustrating a network access of an electronic device 100 according to a first exemplary embodiment.

As illustrated in FIG. 4, the controller 150 of the electronic device 100 confirms whether the electronic device 100 is powered on (S100). As examples, a power on signal may be input through the user input unit (not shown), or may be input through a connection by a USB using a PnP function.

If it is confirmed that the electronic device 110 is powered on, the controller 150 controls the communicating unit 110 to receive a relay signal from the relay 200 (S110). The relay signal has an RSSI pattern. Accordingly, the controller 150 determines whether an RSSI strength of the relay signal is equal to or higher than a predetermined threshold value, and selects the relay 200 transmitting the relay signal, which has the RSSI strength equal to or higher than the predetermined threshold value as a result of the determination, as a candidate relay for initiating the access to the wireless network.

The controller 150 controls the encoding unit 120 to encode unique identification information of the electronic device 100 (S120).

The encoding unit 120 may binary-code the unique identification information, or may encode the unique identification information using at least one coding method selected from among a plurality of coding methods. Alternatively, the unique identification information may be changed according to a predetermined cycle for selection of a coding method from among the plurality of coding methods.

The controller 150 may control the encrypting unit 130 to encrypt the encoded identification information according to an encryption algorithm (S130).

The controller 150 may control the signal generating unit 140 to generate the encoded and encrypted identification information as a signal having a specific RSSI pattern (S140). According to an exemplary embodiment, the signal having the specific RSSI pattern has a cycle in microseconds, regardless of the size of the unique identification information.

The controller 150 may control the communicating unit 110 to transmit the signal generated by the signal generating unit 140 and having the specific RSSI pattern to the relay 200 selected as the candidate relay. The controller 150 receives a response signal corresponding to the signal from the relay 200, and selects the relay 200 for initiating the access to the wireless network if it is determined that the response signal has sufficient integrity, thereby transmitting the association request signal to the relay 200. When the controller 150 receives the association response signal corresponding to the association request signal from the selected relay 200, the controller 150 controls the communicating unit 110 to initiate the access to the wireless network (S150).

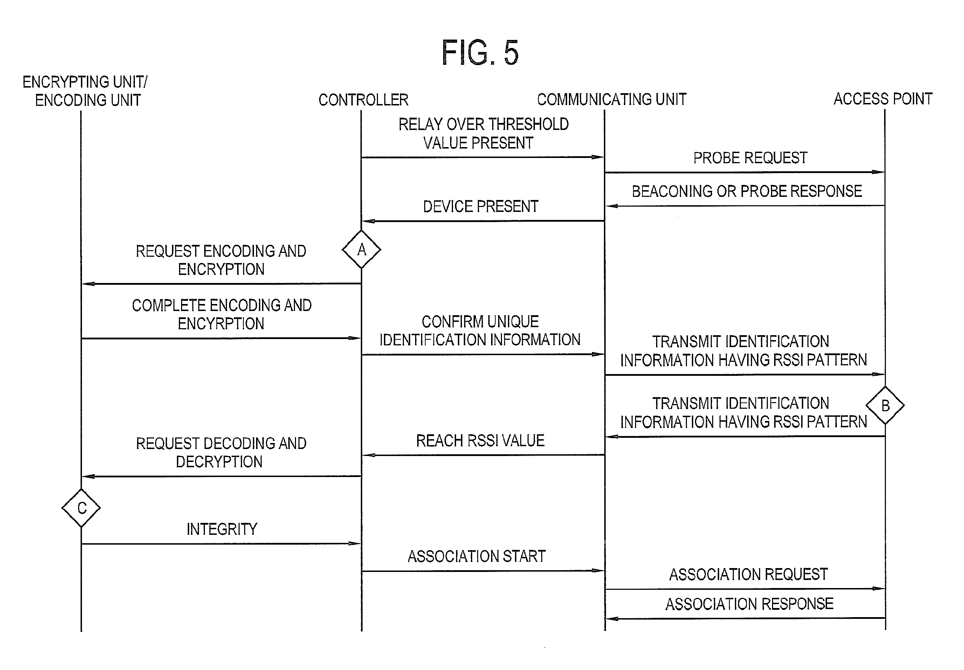

FIG. 5 illustrates initiation of an access to a wireless network in an electronic device 100 according to a first exemplary embodiment in more detail.

A case where the electronic device 100 performs a wireless network communication using Wi-Fi will be described. To perform the wireless network communication using Wi-Fi, an easier network join may be performed through Wi-Fi protect setup. In a related art electronic device, a user must press a Wi-Fi protect setup (WPS) button provided in the electronic device and a Wi-Fi access point, in order to initiate an easier access to the wireless network communication. However, if users are not familiar with computers, the term would be unfamiliar to them and thus they may not correctly utilize the WPS button.

In order to solve such an inconvenience to the users, the electronic device 100 according to the present exemplary embodiment, enabling wireless networking through a wireless network, is configured to automatically initiate an access to the wireless network if the electronic device 100 is powered on, without any manipulation by the user.

As illustrated in FIG. 5, if the electronic device 100 is powered on, the controller 150 of the electronic device 100 actively controls the communicating unit 110 to transmit a probe request signal, so as to probe a Wi-Fi access point. In response to the probe request, the communicating unit 110 may receive a probe response signal from a neighboring Wi-Fi access point. Alternatively, a manual probe may be conducted by receiving a beacon signal periodically transmitted from the Wi-Fi access point.

The controller 150 determines whether the RSSI strength of the probe response signal or the beacon signal received by the communicating unit 110 is greater than a preset specific threshold value. Where it is determined that there is no RSSI greater than the specific threshold value, or there is two or more RSSI greater than the specific threshold value, the user can determine to which access point an access is to be made.

Where it is determined that there is only one RSSI greater than the specific threshold value, the controller 150 controls the encoding unit 120 and the encrypting unit 130 to respectively encode and encrypt the unique identification information of the electronic device 100. The encoded and encrypted identification information becomes a signal having a specific RSSI pattern by the signal generating unit 140, which is transmitted to the access point through the communicating unit 110.

The access point having received the encoded and encrypted unique identification information of the electronic device 100, having the specific RSSI pattern, confirms the strength of the RSSI. If the identification information is recognized as being valid, the access point decodes and decrypts the encoded and encrypted identification information, thereby certifying the validity of the unique identification information. The access point also transmits the encoded and encrypted identification information thereof, having the specific RSSI pattern, to the communicating unit 110 of the electronic device 100.

The controller 150 of the electronic device 100 decodes and decrypts the encoded and encrypted unique identification information of the access point, having the specific RSSI pattern of the access point, at the encoding unit 120 and the encrypting unit 130, respectively, thereby determining the integrity thereof. If the integrity is determined to be sufficient, the controller 150 controls the communicating unit 110 to transmit an association request to the access point. If an association response to the association request is received, the controller 150 controls the communicating unit 110 to initiate the access to the wireless network through the relay 200. Thus, the controller 150 may control the communicating unit 110 to allow the relay 200 to perform a course of EAPOL-Start, EAPOL-Request/Response (M1-M8), EAP_Request (Done) and EAP-Response (ACK), thereby joining the wireless network through the relay 200.

As described above, an electronic device 100 according to an exemplary embodiment automatically initiates an access to a wireless network if the electronic device 100 is powered on, without manipulation by the user, thereby increasing the user's convenience.

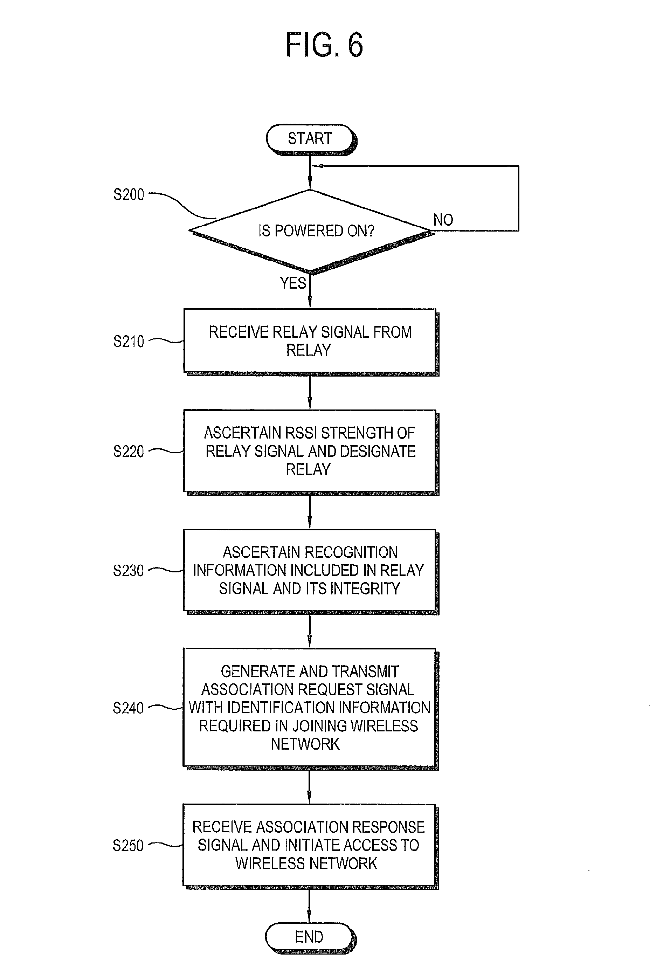

FIG. 6 is a flow chart illustrating a network access of an electronic device 100 according to a second exemplary embodiment.

Referring to FIG. 6, the controller 150 of the electronic device 100 ascertains whether the electronic device 100 is powered on (S200).

If it is ascertained that the electronic device 100 is powered on, the controller 150 controls the communicating unit 110 to receive a relay signal from the relay 200 (S210). The relay signal includes a beacon signal periodically transmitted by the relay or a probe response signal corresponding to a probe request signal of the communicating unit 110. The relay signal is a signal having an RSSI pattern. Thus, the controller 150 determines whether an RSSI strength of the received relay signal is equal to or higher than a predetermined threshold value, and selects the relay 200 for initiating the access to the wireless network accordingly (S220). If a plurality of relay signals is received from the communicating unit 110, the selection of the candidate relay is the same as described in FIG. 4, and thus repetitive descriptions thereof will be omitted herein.

The controller 150 ascertains the recognition information included in the relay signal received through the communicating unit 110 and determines whether the relay signal has sufficient integrity (S230).

As a result of determination, if the relay signal has the sufficient integrity, the controller 150 controls the second signal generating unit 141 to generate the association request signal with the identification information used in joining the wireless network, and to transmit the generated association request signal to the relay 200 through the communicating unit 110 (S240).

When receiving the association response signal corresponding to the association request signal from the relay 200, the controller 150 controls the communication unit 110 to initiate the access to the wireless network through the relay 200 (S250). Thus, the controller 150 may control the communicating unit 110 to allow the relay to perform a course of EAPOL-Start, EAPOL-Request/Response (M1-M8), EAP_Request (Done) and EAP-Response (ACK), thereby joining the wireless network through the relay 200.

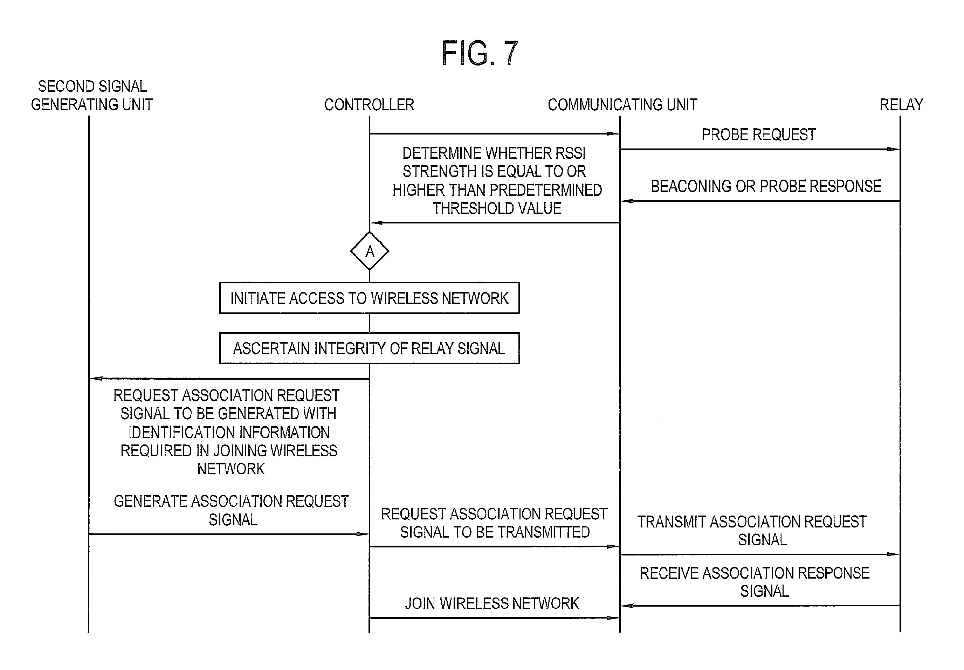

Below, a wireless network access of the electronic device 100 according to the second exemplary embodiment will be described in more detail with reference to FIGs. 7 to 14.

FIG. 7 illustrates that the electronic device 100 automatically joins the wireless network by communication with the relay 200, without any user's operation, such as a personal identification number (PIN) input, a push button input, or the like, through wireless protected setup (WPS) between the relay 200 for relaying communication in the wireless network based on the institute of electrical and electronics engineers (IEEE) 802.11 and the electronic device 100 to join the wireless network.

In a related art WPS handshaking process for joining the wireless network through the WPS, a data frame transmitted and received between the electronic device and the relay is configured to depend on a chipset vendor according to vendors. Accordingly, there has been a problem that the electronic device and the relay are not compatible with each other and thus the WPS is not automatically performed.

However, the electronic device 100 according to the present exemplary embodiment can automatically perform the WPS without a user's specific operation by ascertaining the communication of the data frame between the electronic device and the relay in an in-band of the WLAN and an integrity of the communication.

As shown in FIG. 7, when the electronic device 100 is powered on, the communication unit 110 receives a relay signal from the relay device 200 under the control of the controller 150.

The relay signal may include a beacon signal periodically transmitted from the relay 200 or a probe response signal from the relay 200 corresponding to a probe request signal of the communicating unit 110.

The relay signal is a signal having an RSSI pattern. Thus, the controller 150 determines whether an RSSI strength of the relay signal received through the communicating unit 110 is equal to or higher than a predetermined threshold value.

If a plurality of relay signals is received through the communicating unit 110, the selection of the candidate relay is the same as described in FIG. 5, and thus repetitive descriptions thereof will be omitted herein.

If there is one relay signal having the RSSI strength equal to or higher than a predetermined threshold value, the controller 150 ascertains the recognition information for initiating the access to the wireless network included in the data frame of the relay signal.

The recognition information may include at least one of information about presence of the recognition information, information about a vendor of the electronic device, product information about the electronic device, and the integrity information of the recognition information.

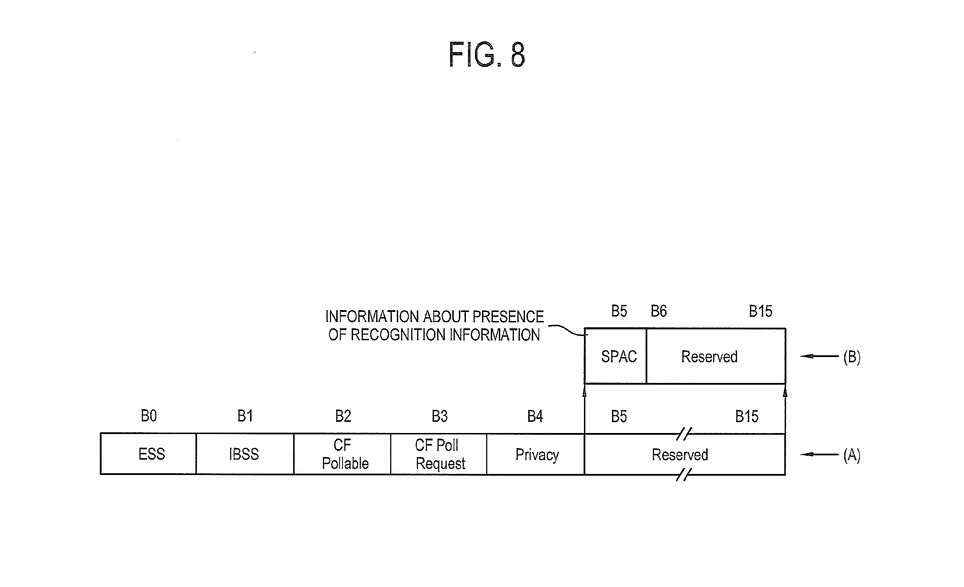

Here, a data frame structure showing information about the presence of the recognition information may be as shown in FIG. 8.

FIG. 8 shows a frame structure of a capability information field in the data frame of the relay signal according to an exemplary embodiment.

(A) of FIG. 8 shows a frame structure of a related art capability information field, and (B) shows a frame structure of a capability information field included in the relay signal received in the electronic device 100 according to the present exemplary embodiment.

In (B) of FIG. 8, B5 designated as "SPAC" includes data that can be used to ascertain the presence of the recognition information for initiating the access to the wireless network. The "SPAC" may be designated as 0 or 1. The "SPAC" is designated as 0 if there exists no recognition information. On the other hand, the "SPAC" is designated as 1 if there exists the recognition information.

Accordingly, if receiving the relay signal, the controller 150 ascertains whether the "SPAC" of the B5 of the frame structure of the capability information field is designated as 0 or 1.

When it is determined that the SPAC is designated as 1, the controller 150 ascertains whether or not the relay signal includes the information about the vendor of the electronic device 100 and/or the product information of the electronic device 100.

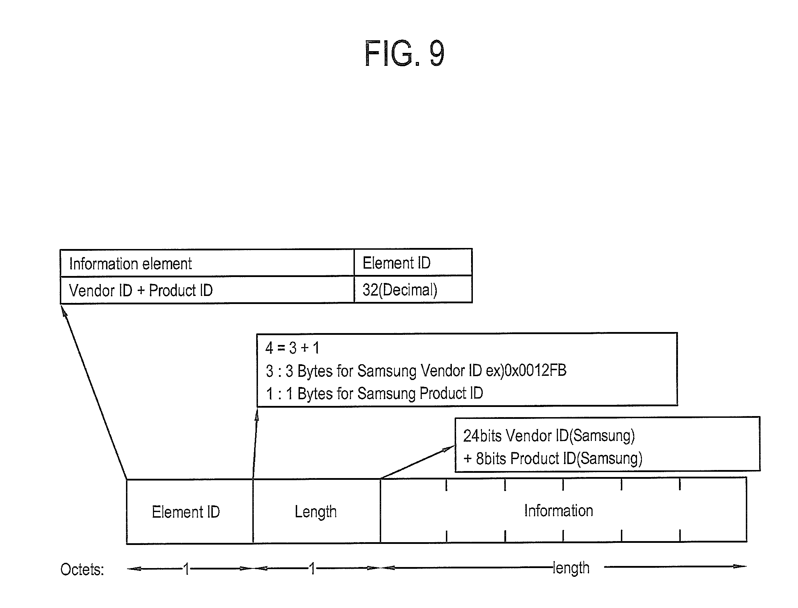

FIG. 9 shows a data frame structure with regard to the information about a vendor of the electronic device and product information about the electronic device included in the relay signal according to an exemplary embodiment.

As shown in FIG. 9, "Element ID" indicates what information is included, "Length" indicates the length of data, and "Information" includes information of 24 bits about the vendor of the electronic device 100 (Vendor ID) and product information of 8 bits (Product ID). The fields of "Element ID," "Length," and "Information" shown in FIG. 9 are merely exemplary, and it is understood that another exemplary embodiment is not limited thereto.

The controller 150 ascertains whether the relay signal includes data such as the information about the vendor of the electronic device 100 and the product information, and ascertains the information about the vendor and the product information if the relay signal includes the information.

If it is determined that the vendor information and the product information are correct, the controller 150 determines whether the relay signal has sufficient integrity through the integrity information.

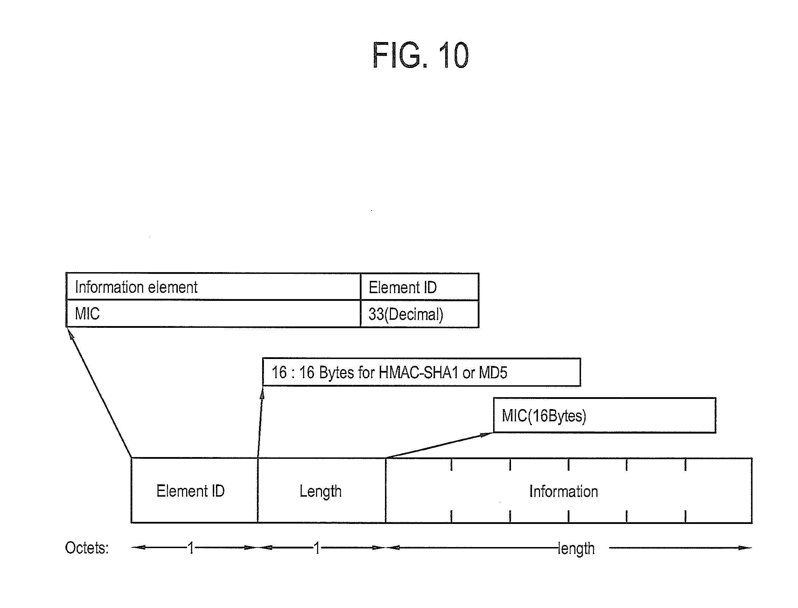

FIG. 10 shows a data frame structure regarding the integrity of the relay signal according to an exemplary embodiment.

As shown in FIG. 10, "Element ID" indicates what information is included, "Length" indicates the length of data, and "Information" includes information of 16 bits about the integrity (MIC). The sections of "Element ID," "Length" and "Information" shown in FIG. 10 are merely exemplary, and it is understood that another exemplary embodiment is not limited thereto.

The controller 150 determines whether the relay signal has sufficient integrity through the integrity information included in the relay signal, and progresses to the following steps if it is determined that relay signal has the sufficient integrity.

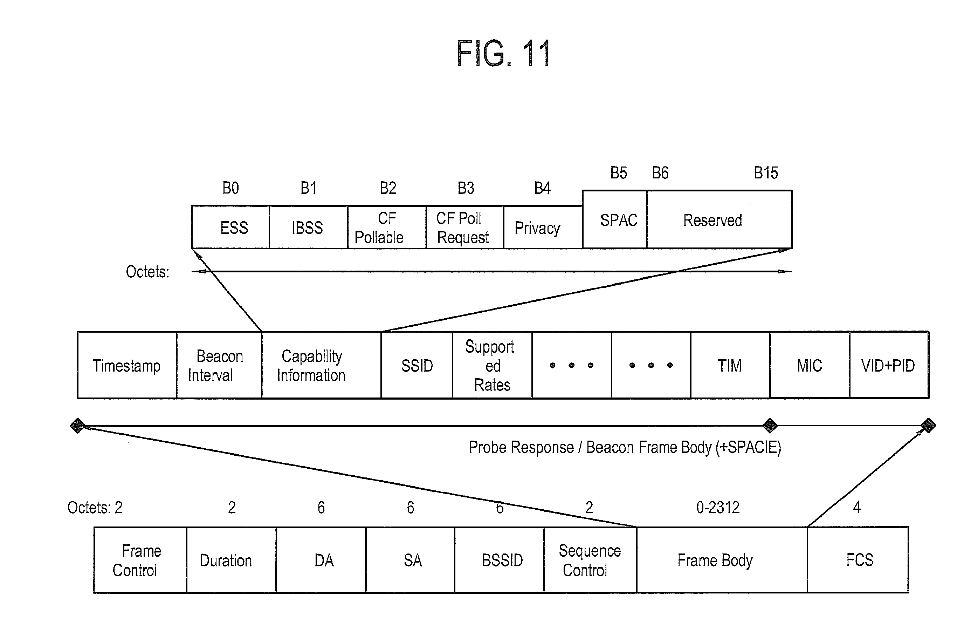

FIG. 11 shows an exemplary embodiment of a data frame structure of the relay signal received from the relay 200 according to an exemplary embodiment.

The relay signal may include the beacon signal periodically transmitted by the relay 200, or the probe response signal corresponding to the probe request signal of the communicating unit 110.

As shown in FIG. 11, the relay signal includes a frame body section following a MAC header. In this frame, a capability information field includes information (SPAC) about presence of recognition information for initiating the access to the wireless network. Also, the frame body further includes a data frame for information (VID) about the vendor of the electronic device 100, product information (PID), and integrity information (MIC). The data about the vendor information (VID), the product information (PID), and the integrity information (MIC) are not included in the frame body under the related art WPS network protocol.

Accordingly, when receiving the relay signal, the controller 150 ascertains the SPAC of the capability information field and determines whether the SPAC is 1 or not. If the SPAC is 1, the controller 150 determines whether the vendor information (VID) of the electronic device 100 and the product information (PID) included in the frame body are correct.

If it is determined that the vendor information and the product information are correct, the controller 150 determines whether the relay signal has sufficient integrity through the integrity information (MIC).

If it is determined that the relay signal has the sufficient integrity, the controller 150 controls the second signal generating unit 141 to generate an association request signal with identification information used in joining the wireless network.

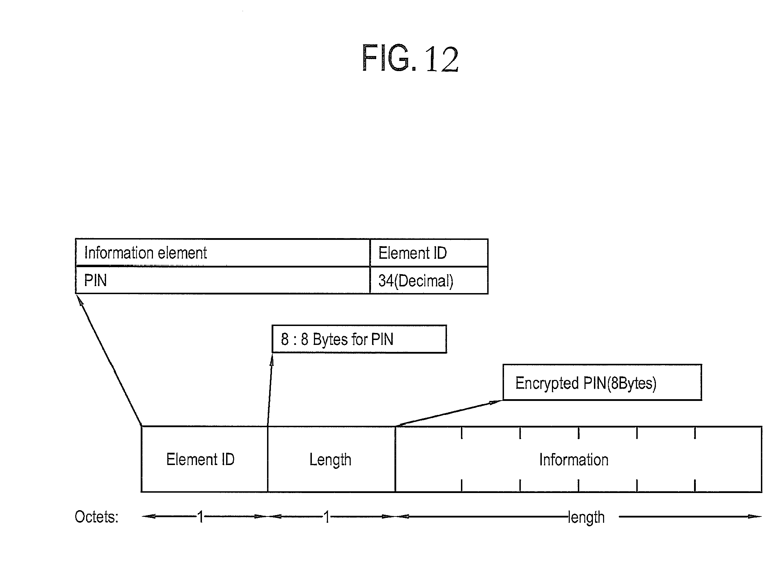

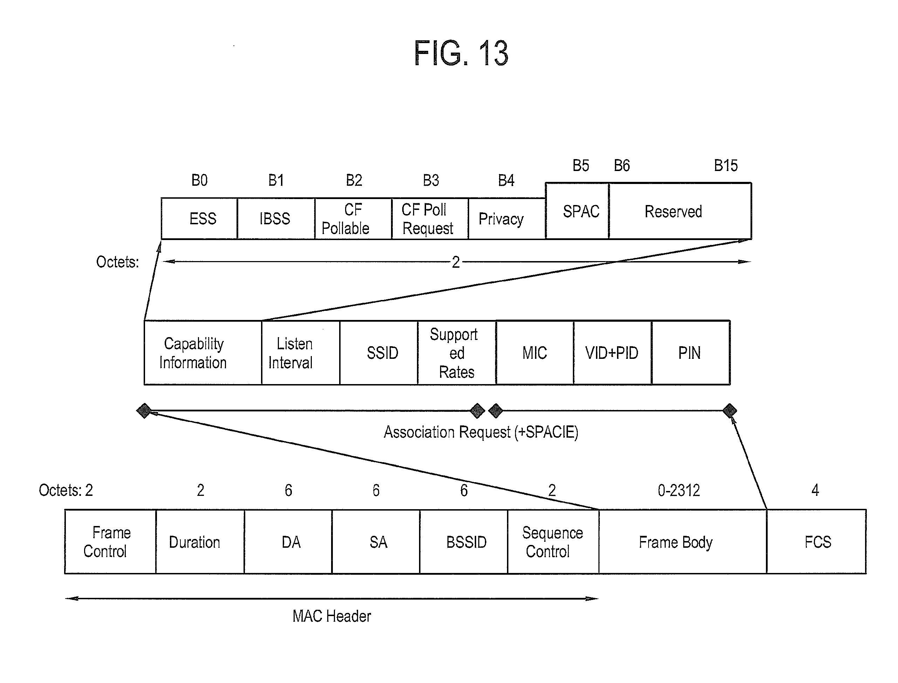

FIGs. 12 and 13 shows data frame structures of the association request signal generated in the second signal generating unit 141 of the electronic device 100 according to a second exemplary embodiment.

FIG. 12 shows a data structure of the identification information used in joining the wireless network. As shown therein, in the association request signal, "Element ID" indicates what information is included, "Length" indicates the length of data, and "Information" includes identification information (PIN) of 8 bits used in joining the wireless network. The fields of "Element ID," "Length," and "Information" shown in FIG. 12 are merely exemplary, and it is understood that another exemplary embodiment is not limited thereto.

The identification information used in joining the wireless network may be encrypted by the encrypting unit 130 under control of the controller 150.

FIG. 13 shows a data frame structure of the association request signal generated in the second signal generating unit 141. As shown therein, the association request signal includes a frame body section following a MAC header. In this frame, a capability information field includes information (SPAC) about presence of recognition information for initiating the access to the wireless network. Also, the frame body further includes a data frame for information (VID) about the vendor of the electronic device 100, product information (PID), integrity information (MIC), and identification information (PIN) used in joining the wireless network. The data about the vendor information (VID), the product information (PID), the integrity information (MIC), and the identification information (PIN) used in joining the wireless network are not included in the frame body under the related WPS network protocol.

Accordingly, the association request signal generated in the second signal generating unit 141 under the control of the controller 150 is transmitted to the relay 200 through the communicating unit 110. The relay 200 that receives the association request signal can ascertain the recognition information (e.g., the information about the presence of the recognition information, the vendor information of the electronic device, the product information, the integrity information, and the identification information used in joining the wireless network) included in the association request signal by the same or similar process of the controller 150 of the electronic device 100 in ascertaining the relay signal.

As a result of the ascertaining, if it is determined that all the information is correct, the relay 200 transmits the association response signal corresponding to the association request signal to the electronic device 100.

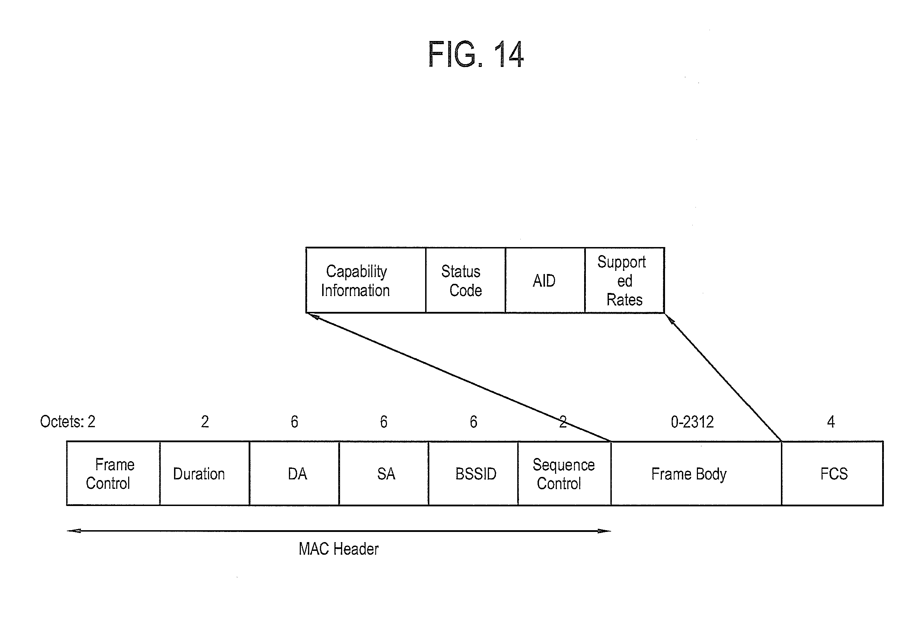

FIG. 14 shows a data frame structure of the association response signal according to an exemplary embodiment.

As shown in FIG. 14, the association response signal includes status code data as a code for showing the status of the association request signal in the frame body section following the MAC header. The status code shows whether the association request signal is correct or not.

When receiving the association response signal from the relay 200 through the communication unit 110 of the electronic device 100, the controller 150 ascertains the status code data included in the association response signal and controls the communicating unit 110 to allow the relay 200 to perform a course of EAPOL-Start, EAPOL-Request/Response (M1-M8), EAP_Request (Done) and EAP-Response (ACK) if all is correct, thereby joining the wireless network through the relay 200.

While not restricted thereto, the exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, the exemplary embodiments may be written as computer programs transmitted over a computer-readable transmission medium, such as a carrier wave, and received and implemented in general-use digital computers that execute the programs. Moreover, while not required in all aspects, one or more units of the electronic device 100 can include a processor or microprocessor executing a computer program stored in a computer-readable medium, such as a local storage.

As described above, an automatic access to a wireless network can be initiated without any particular operation of a user such as a personal identification number (PIN) input, a button input or the like in order to join the wireless network once the electronic device is powered on, so that it is more convenient for the user to set the wireless network.

Although a few exemplary embodiments have been illustrated and described in details, it will be appreciated by those skilled in that art that changes may be made in these exemplary embodiments without departing from the principles of the inventive concept, the scope of which is defined in the appended claims.

## Claims

1. An electronic device enabling wireless networking through a wireless network, the electronic device comprising:
a communicating unit arranged to perform wireless communication through a relay relaying communication in the wireless network; and
a controller arranged to ascertain whether the electronic device is powered on, to receive a relay signal from the relay if the electronic device is powered on, and to control the communicating unit to initiate an access to the wireless network based on the received relay signal.

2. The electronic device of claim 1, further comprising an encoding unit for encoding a signal transmitted from or received by the communicating unit,
wherein the controller is arranged to control the encoding unit to encode identification information of the electronic device if the relay signal is received through the communicating unit, and to control the communicating unit to transmit the encoded identification information to the relay.

3. The electronic device of claim 2, wherein the encoding unit is arranged to encode the identification information based on at least one coding method selected from among a plurality coding methods, and to repeat selection of one coding method from among the plurality coding methods on a predetermined cycle.

4. The electronic device of claim 2, further comprising an encrypting unit for performing encryption,
wherein the controller is arranged to control the encrypting unit to encrypt the identification information encoded by the encoding unit.

5. The electronic device of claim 2, further comprising a signal generating unit arranged to generate a signal having a received signal strength indication (RSSI) pattern,
wherein the controller is arranged to control the communicating unit to transmit the signal having the generated RSSI pattern.

6. The electronic device of claim 5, further comprising an encrypting unit for performing encryption,
wherein the controller is arranged to control the encrypting unit to encrypt the identification information encoded by the encoding unit, and to control the signal generating unit to generate the encoded and encrypted identification information as the signal having the RSSI pattern.

7. The electronic device of claim 5, wherein the signal generating unit is arranged to generate the signal having the RSSI pattern as a signal having a cycle in microseconds.

8. The electronic device of claim 1, wherein:
the relay signal comprises a signal having a received signal strength indication (RSSI) pattern; and
the controller is arranged to determine whether an RSSI strength of the received relay signal is greater than or equal to a predetermined threshold value, and to designate the relay that transmits the relay signal as a device for initiating the access to the wireless network if the RSSI strength is determined to be greater than or equal to the threshold value.

9. The electronic device of claim 8, wherein the relay signal comprises a beacon signal transmitted from the relay or a probe response signal transmitted from the relay in response to a probe request signal transmitted by the communicating unit.

10. The electronic device of claim 8, wherein the relay signal comprises a data frame comprising recognition information for allowing the electronic device to initiate an access to the wireless network.

11. The electronic device of claim 10, wherein the recognition information comprises at least one of information about presence of the recognition information, information about a vendor of the electronic device, product information of the electronic device, and information about integrity of the recognition information.

12. The electronic device of claim 10, further comprising a second signal generating unit for generating an association request signal,
wherein the controller is arranged to ascertain an integrity of the relay signal and to control the communicating unit to transmit the association request signal generated by the second signal generating unit to the relay if the relay signal has a sufficient integrity according to the ascertaining.

13. The electronic device of claim 12, further comprising an encrypting unit for performing encryption,
wherein the controller is arranged to control the encrypting unit to encrypt identification information used in joining the wireless network, and to control the second signal generating unit to generate an association request signal comprising the encrypted identification information.

14. The electronic device of claim 13, wherein the controller is arranged to control the second signal generating unit to generate an association request signal comprising information about an integrity of the encrypted identification information.

15. The electronic device of claim 13, wherein the controller is arranged to control the communicating unit to initiate an access to the wireless network through the relay if an association response signal is received from the relay corresponding to the transmitted association request signal.
